# EUROPEAN PATENT SPECIFICATION

(11) **EP 1 520 630 B1**
(45) Date of publication and mention of the grant of the patent: **26.08.2009**
(21) Application number: 04077754.2
(22) Date of filing: 04.10.2004
(51) Int. Cl.: B05B 7/00, A23L 1/00, A23P 1/16, A47J 31/44, A47J 43/12

(54) **Method and apparatus for forming gas bubbles in a liquid product**
Verfahren und Vorrichtung zur Bildung von Gasblasen in einer Flüssigkeit
Procédé et dispositif de formation des bulles de gaz dans un produit liquide

(30) Priority: 02.10.2003 NL 1024434
(43) Date of publication of application: 06.04.2005
(73) Proprietor: Friesland Brands B.V., 7943 PE Meppel (NL)
(72) Inventor: Poortinga, Albert Thijs, 7422 LN Deventer (NL); Jongsma, Tjeerd, 6721 AA Bennekom (NL); Netjes, Luite Theodoor, 8264 AE Kampen (NL); Koman-Boterblom, Hendrika, 7421 EZ Deventer (NL); Wijnen, Maria Elisabeth, 7425 GS Deventer (NL)
(74) Representative: Winckels, Johannes Hubertus F.

(56) References cited:
- WO-A-01/36105
- WO-A-01/62392
- WO-A-89/02221
- GB-A- 2 304 523
- GB-A- 2 390 984
- US-A1- 2003 089 244
- US-B1- 6 322 610

## Description

The invention relates to a method for forming gas bubbles and in particular stable gas bubbles in a liquid product. In addition, the invention concerns an apparatus for carrying out such a method. Finally, the invention concerns a food and specifically an edible foam manufactured according to such a method and/or utilizing such apparatus.

The method is suitable, for instance, for producing a foam and/or an airy product. In this method, the starting material is a liquid product and in particular a protein solution, in which a gas is incorporated. This gas is, for instance, a gas that is poorly soluble in the product. The gas and the protein-containing product are introduced into a mixing space and mixed, for instance by vigorous blending and/or whipping, in such a way that the gas bubbles referred to are formed in the product. In a preferred embodiment which is described in detail in the Dutch patent application NL-1024435, which has been filed at the same date as the present application, the product is subsequently heated, so that proteins on the surface of the bubbles denature and crosslink. When the bubbles presently shrink, the crosslinked protein layers on the bubble surface become tensioned, such that shrinkage stops. In this way, bubbles have been formed which are stable for a very long time (i.e. whose size remains constant in time). Such shrinkage occurs spontaneously in a part of the bubbles as a result of so-called Ostwald ripening, but is preferably promoted by making bubbles which consist partly of steam, which bubbles shrink as a result of condensation of the steam.

This preferred method is incorporated in the present description by reference. The product is in particular a food, which is for instance pourable and/or drinkable. In that case, with the gas bubbles formed, an improved taste sensation can be achieved. Moreover, the food can thus have a relatively low fat content while preserving a desired creamy taste sensation.

The number of gas bubbles and the average gas bubble size appear to have an important influence on sensory properties of the food, for instance creaminess, freshness, softness or airiness. Of the gas bubbles formed with the known method, only a part prove to be sufficiently stable to be able to maintain themselves in the product for a longer time. In other words, only a part of the bubbles prove to have a size that hardly changes for at least a few weeks. Another part of the gas bubbles grow in time, as a result of Ostwald ripening. Upon storage for some time, a large part of the gas is contained in these, unstable, bubbles. In fluid products, these bubbles which have grown large, cream strongly, so that they disappear from the product. The known methods are therefore little efficient when it comes to stable foam formation. The above-mentioned unstable bubbles often prove to have a relatively large diameter already directly upon production. A possible explanation of the instability of these relatively large bubbles is that the protein layer around these bubbles is not strong enough to prevent growth of the bubbles.

Another patent application of applicant, NL-1024438, which has been filed at the same date as the present application, describes mixing with the product at least a condensing gas and a gas relatively poorly soluble in the product in order to form the gas bubbles referred to in the product. The condensing gas mentioned can for instance comprise steam, which is cheap and simply obtainable. The gas that is relatively poorly soluble in the product can comprise various kinds of gases, for instance an inert gas, nitrogen, or the like. An advantage of this method has been found to be that in the product, gas bubbles are formed which contain both the condensing gas mentioned and the poorly soluble gas mentioned. The bubbles are covered with protein from the product. The injected gases have such a high temperature that the proteins on the bubble surface denature and crosslink. Upon mixing, at least a part of the condensing gas condenses. This leads to a reduction of the respective gas bubbles, so that the protein layers around the bubbles become tensioned. This provides for stable bubbles. Preferably, a relatively large part of the gas bubbles formed shrink after the gas injection to diameters of less than about 100 µm, in particular less than about 50 µm. These diameters can be derived from microscope recordings. It has been found that such small gas bubbles are stable against Ostwald ripening, probably owing to their relatively strong protein layer.

The object of the present invention is to optimize the mixing of the gas into the product to thereby enable a greater amount of stable gas bubbles to be obtained in the product. In particular, the object of the invention is to provide a method with which a relatively large number of stable gas bubbles can be formed in the product.

Therefore, according to the invention, there is provided a method for forming gas bubbles in a liquid product, wherein at least a condensing gas and a gas poorly soluble in the product are mixed with the product to form the gas bubbles in the product, while at least one of the gases is injected into the product at a supersonic mixing speed.

Surprisingly, a relatively large number of stable gas bubbles prove to be formed by injecting at least one of the gases mentioned into the product at a supersonic speed. Without wishing to be bound to any theory, a possible explanation is that the high mixing speed leads to a good, fast mixing of the product with the gases and hence to a fast gas bubble formation. Such rapidly formed gas bubbles contain a relatively large content of condensing gas, since this gas has yet had no or little time to condense. The rapidly formed gas bubbles can subsequently shrink relatively strongly through the condensation of the condensing gas, which provides the bubbles with the stability mentioned. According to the invention, the gases can for instance be injected at supersonic speed into the product simply as a gas mixture.

Surprisingly, at the supersonic mixing speed, a particularly large number of stable gas bubbles prove to be formed in the product. A possible explanation is that owing to the supersonic mixing speed, an early condensation of the condensing gas is prevented very well, so that the bubbles can shrink considerably during the gas condensation following the gas bubble formation. Moreover, the supersonic speed leads to a relatively fast, efficient, homogeneous mixing of the gas with the product, which is economically advantageous.

Further, it is advantageous according to the invention when at least one of the gases mentioned has a temperature in the range of about 50-150°C, in particular in the range of about 90-110°C, to bring the product to a treatment temperature. In this way, in a simple manner, the product can undergo a temperature treatment as well. When the product contains protein, this temperature treatment can lead to denaturation of that protein. As a result, protein-containing surfaces of formed gas bubbles are strengthened, which further enhances the stability of the bubbles. Moreover, the shrinkage of the gas bubbles can then lead to a further networking of the gas bubble surfaces, which further strengthens the gas bubbles.

The gases and the product, after being mixed, are preferably held at the treatment temperature mentioned for a particular treatment period, in particular for at least 10 s, in order to allow the temperature treatment to be sufficiently effective. Next, the product provided with gas bubbles can for instance actively or passively be cooled down to a storage temperature, for instance a temperature below room temperature, in particular a refrigerator temperature.

The invention further provides an apparatus for forming gas bubbles in a protein solution, in particular according to a method of the invention, which apparatus is provided with a mixing space (3) to mix the product with at least a condensing gas and a gas poorly soluble in the product and with a product supply (2) to supply the product to the mixing space (3), the apparatus being further provided with at least one gas injector (1) which is arranged to spout at least one of the gases into the mixing space (3) at a supersonic mixing speed, and wherein the gas injector (I) comprises a steam injector which is coupled to a steam generator.

Incidentally, WO-A-01/62392 discloses a device and specifically a nozzle with which ultrasonic gas flows and possibly gas and liquid flows are introduced into a flotation tank. The aim of the devices described is to introduce many small bubbles into a liquid medium, which bubbles are to rise rapidly to the liquid surface.

United States Patent 6,322,610 describes a device for injecting oxygen and technological gases in steel making or other metallurgic processes.

The apparatus according to the invention is particularly suitable for carrying out the method according to the invention. The apparatus is provided with a mixing space to mix the product with the gases mentioned. As a result, during use, stable gas bubbles can be formed in the product, which has already been described hereinabove. Preferably, the apparatus is provided with at least one gas injector to inject one or more gases into the mixing space, which leads to a fast mixing and a good formation of stable gas bubbles.

In addition, the invention provides a food prepared with the method according to the invention and/or utilizing the apparatus according to the invention. This food contains a large number of stable gas bubbles containing heat denatured and crosslinked proteins at their surface, at least part of which gas bubbles have a diameter of less than 100 µm, in particular less than 50 µm, which imparts good sensory properties to the food, for instance in the areas of taste, creaminess, freshness, softness, airiness.

Incidentally, in WO-A-89/02221, a carbon dioxide treated or aerated milk (product) is described. The formation of foam is not described nor aimed at.

United States patent application 2003/089244 concerns a device for generating a milk foam and heating up milk. The type of device is useful in espresso appliances and so does not contemplate preparing a stable foam with a long shelf-life.

In the British patent application 2304523, whipped cream and mousses are described which are to be prepared by beating in non-oxidizing gases with, for instance, an extrusion apparatus.

Presently, the invention will be clarified on the basis of an exemplary embodiment and the drawing, in which:
Fig. 1 shows a schematically represented exemplary embodiment of the invention;
Fig. 2 shows a photograph of a product obtained at subsonic mixing speed; and
Fig. 3 shows a photograph of a product obtained at supersonic mixing speed.

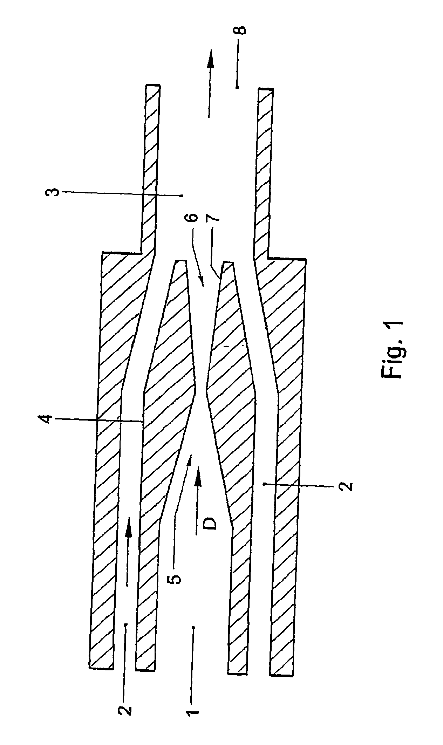

Figure 1 shows a longitudinal cross section of a part of a steam injector for forming gas bubbles in a product. The steam injector comprises a steam supply channel 1 which terminates in a mixing chamber 3. The apparatus further comprises a product supply channel 2 which terminates, separately from the steam supply channel 1, in the mixing chamber 3. As Fig. 1 shows, the product supply channel 2 extends around the steam supply channel 1, at least adjacent the mixing chamber 3. However, other configurations are also possible.

The steam supply channel 1 is provided with a supersonic outflow nozzle 4. With this outflow nozzle 4, steam can be spouted into the mixing chamber 3 at supersonic speed. The steam outflow nozzle 4 comprises - viewed in a gas flow direction D - in succession a converging channel part 5 and a diverging channel part 6. The diverging channel part 6 terminates in the mixing chamber 3. This diverging channel part comprises in particular an inner wall 7 which extends substantially along a cone-shaped surface.

The apparatus further comprises supply means for supplying a gas which is relatively poorly soluble in the product to the mixing space 3. In the present exemplary embodiment, these supply means are integrated, at least adjacent the mixing chamber 3, into the steam injector 1. Further, the apparatus comprises a discharge 8, arranged downstream, for discharging the product continuously from the mixing chamber 3. The apparatus shown is suitable in particular for continuous, in-line operation.

During use, the steam injector 1 is coupled to a steam generator, not shown, in order for steam to be spouted via the steam injector 1 into the mixing chamber 3. Upstream of the mixing chamber 3, for instance in the steam generator and/or in the steam supply channel 1, a gas which is relatively poorly soluble in the product is added to the steam.

During use, the steam pressure and mixing chamber pressure are set such that the gas mixture of steam and the poorly soluble gas leaves the supersonic outflow nozzle 4 at supersonic speed. Evidently, this setting depends *inter alia* on the diameter of the outflow nozzle 4. The skilled person can simply obtain the supersonic mixing speed through variation of the outflow nozzle cross section mentioned and the pressures mentioned. The mixing chamber pressure can be, for instance, in the range of about 1-2 bars, the steam pressure in the steam supply channel 1 is above the mixing chamber pressure and is typically lower than 18, and preferably lower than 10 bars. The outflow nozzle has a smallest diameter which is of a magnitude such that the steam speed is supersonic and is preferably higher than 500 m/s, for instance 1,000 m/s. As an indication, this smallest diameter is in the range of 0.1-3 mm. Evidently, other pressures and dimensions can be used to obtain a supersonic gas flow.

During use, furthermore, a liquid product is introduced via the respective supply channel 2 into the mixing chamber 3 to mix with the injected gas mixture. The composition of the product and the gas mixture, as well as process parameters such as the temperature, pressure, and gas speed, are such that mixing is accompanied by the formation of gas bubbles in the product. To that end, the product can for instance contain protein or a protein mixture. The gases can contain, for instance, at least 10%, preferably at least about 20% (which percentages are based on the product volume), of gas poorly soluble in the product, which has been found to lead to good results.

Owing to the supersonic speed of the gas mixture, in the mixing space 3, a mixing of the product with the gas mixture takes place, such that a large number of stable gas bubbles are formed in the product. Moreover, the product is heated by the steam, which is advantageous in particular in the case of a protein-containing product, since the protein can undergo denaturation under the influence of the heating. After the mixing, the steam condenses, which leads to a desired advantageous volume reduction of gas bubbles formed.

It has been found to be advantageous when the gas mixture travels a particular distance at supersonic speed in the mixing space 3 before the mixture has slowed to a subsonic speed. In this way, an increased yield of stable gas bubbles can be obtained. To keep the speed of the gas in the mixing space 3 at a desired supersonic value, the cross section of the mixing chamber 3 and/or the discharge 8 can be varied. The gas and the product can for instance, after and/or during mixing, be accelerated. This is for instance achieved when, unlike in the drawing, the mixing chamber 3 and/or the discharge 8 - viewed in a downstream direction of the gas injector - converges.

### Example

A 3.5% whey protein solution, thickened with 0.05% κ-carrageen, was put together with a nitrogen/steam mixture, with 20% of nitrogen, in a mixing chamber. In a first case, the addition was done by injecting the gas mixture into the mixing chamber at a subsonic speed. In the second case, the gas mixture was injected at supersonic speed.

In both cases, the product was first heated to 50°C. Through the steam mixture injection into the mixing chamber, the product was subsequently adjusted to a temperature of 100°C at a pressure of 1.5 bars. The product was then held at this treatment temperature for 30 seconds, to be finally cooled to a temperature of 5°C in a few seconds. After 1 day, it was measured how much gas the product contained.

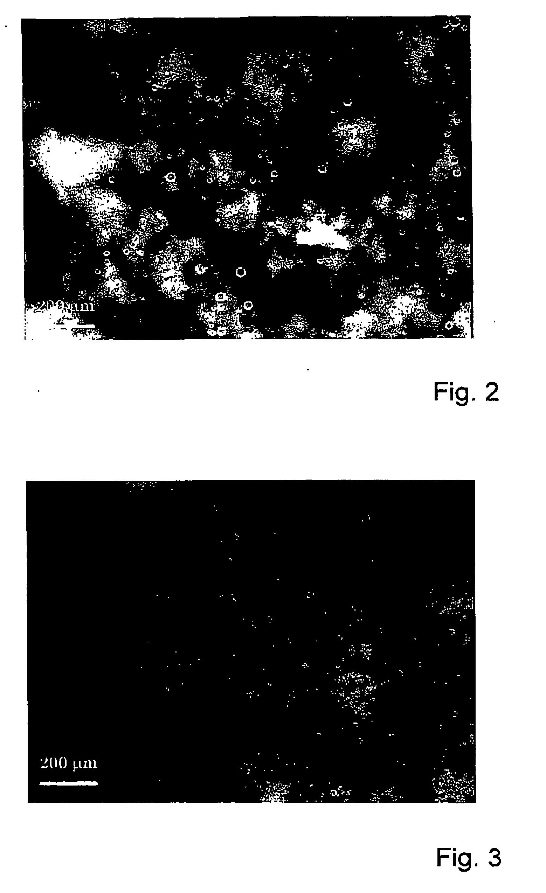

The product treated with subsonic steam injection proved to contain 1% overrun. Fig. 2 shows a photograph of this product. It follows from Fig. 2 that the gas bubbles formed still comprise relatively many unwanted large bubbles. The product treated with supersonic steam, of which Fig. 3 shows a photograph, was found to contain even 3% overrun. Fig. 3 further shows that the gas bubbles formed are relatively small. In addition, these bubbles are stable: they do not measurably change in size for a few weeks. This affords in particular the product obtained with supersonic steam a good shelf stability and suitability for commercial application.

It will be evident to the skilled person that the invention is not limited to the exemplary embodiment described. Various modifications are possible within the framework of the invention such as it is set forth in the appended claims.

Thus, the product can for instance comprise a protein solution which may or may not be edible, in which denaturable proteins may be present. An edible protein solution can for instance comprise a milk protein, a whey protein and casein, egg white proteins, yeast isolate, soy protein, hemoglobin, plant protein isolate, meat protein, collagen, gelatin and the like.

The product can further contain various conventional ingredients, for instance a thickener, colorings, flavorings, sweeteners, fat and the like.

Furthermore, the product is in particular a food, for instance a beverage, soft drink, yoghurt drink, dessert or the like.

The liquid product can further contain solid and/or liquid ingredients to be added to the product.

Further, the condensing gas and poorly soluble gas can be injected into the product via the same injector 1 or separately from each other, via different injectors and/or beams.

In addition, one or more condensing gases and/or one or more gases poorly soluble in the product can be used.

Furthermore, for instance a dispersing device, in particular an in-line turrax, can be arranged downstream of the gas injector 1, which has been found to further increase the produced fraction of stable gas bubbles.

## Claims

1. A method for forming gas bubbles in a liquid product, wherein at least a condensing gas and a gas poorly soluble in the product are mixed with the product to form said gas bubbles in the product, wherein at least one of said gases is injected into the product at a supersonic mixing speed.

2. A method according to claim 1, wherein said gases are injected into the product as a gas mixture.

3. A method according to any one of the preceding claims, wherein the condensing gas comprises steam.

4. A method according to any one of the preceding claims, wherein the poorly soluble gas comprises an inert gas, in particular nitrogen.

5. A method according to any one of the preceding claims, wherein said condensing gas substantially condenses after forming gas bubbles in said product.

6. A method according to any one of the preceding claims, wherein at least one of said gases has a temperature in the range of 50--150 °C, in particular in the range of 90-110 °C, to bring the product to a treatment temperature.

7. A method according to claim 6, wherein said gases and the product after mixing are held at said treatment temperature for a particular treatment period, in particular for at least 10 s.

8. A method according to any one of the preceding claims, wherein the product comprises at least one denaturable protein or protein mixture.

9. A method according to any one of the preceding claims, wherein said gases comprise at least 10%, in particular at least 20%, of gas relatively poorly soluble in the product, which percentages are based on the volume of the final product.

10. A method according to any one of the preceding claims, wherein at least the injected gas, after the injection into the product, is accelerated.

11. A method according to any one of the preceding claims, wherein the gases are mixed with the product, such that at least a part of the resulting gas bubbles have a diameter of less than 100 µm, in particular of less than 50 µm.

12. An apparatus for forming gas bubbles in a protein solution, in particular according to a method of any one of the preceding claims, wherein the apparatus is provided with a mixing space (3) to mix the product with at least a condensing gas and a gas poorly soluble in the product_and with a product supply (2) to supply the product to the mixing space (3), the apparatus being provided with at least one gas injector (1) which is arranged to spout at least one of said gases into the mixing space (3) at a supersonic mixing speed, and wherein the gas injector (1) comprises a steam injector which is coupled to a steam generator.

13. An apparatus according to claim 12, wherein said gas injector (1) is provided with at least one supersonic outflow nozzle (4).

14. An apparatus according to claim 13, wherein said outflow nozzle (4), viewed in a gas flow direction (D), is provided in succession with a converging channel part (5) and a diverging channel part (6).

15. An apparatus according to at least claim 12, wherein said mixing space (3), viewed in a downstream direction of the gas injector (1), converges.

16. An apparatus according to claim 12, wherein the apparatus is provided with supply means (1) for supplying said poorly soluble gas to said mixing space (3).

17. An apparatus according to claims 12 and 176, wherein said gas injector (1) comprises said supply means of a gas poorly soluble in the product.

18. An apparatus according to at least claim 12, wherein the apparatus is provided with a product supply (2) to supply the product to the mixing space (3).

19. An apparatus according to at least claim 18, wherein the product supply (2) and the gas injector (1) are substantially separated from each other.

20. An apparatus according to at least claim 15, provided with a product discharge (8) to discharge the product mixed with said gases from the mixing space (3).

21. An apparatus according to at least claim 15, wherein downstream of the gas injector (1) a dispersing device is arranged.

22. A food, prepared with a method according to any one of claims 1-11 and/or with an apparatus according to any one of claims 12-21, which food comprises gas bubbles containing heat-denatured and crosslinked proteins at their surface, at least part of which gas bubbles have a diameter of less than 100 µm, in particular less than 50 µm.

## Patentansprüche

1. Verfahren zum Bilden von Gasblasen in einem flüssigen Produkt, wobei zumindest ein kondensierendes Gas und ein schwer in dem Produkt lösliches Gas mit dem Produkt gemischt werden, um die Gasblasen in dem Produkt zu bilden, wobei zumindest eins der Gase mit einer Überschallmischgeschwindigkeit in das Produkt eingespeist wird.

2. Verfahren nach Anspruch 1, wobei die Gase als eine Gasmischung in das Produkt eingespeist werden.

3. Verfahren nach einem der vorstehenden Ansprüche, wobei das kondensierende Gas Dampf umfasst.

4. Verfahren nach einem der vorstehenden Ansprüche, wobei das schwer lösliche Gas ein inertes Gas, insbesondere Stickstoff umfasst.

5. Verfahren nach einem der vorstehenden Ansprüche, wobei das kondensierende Gas im Wesentlichen nach dem Bilden von Gasblasen in dem Produkt kondensiert.

6. Verfahren nach einem der vorstehenden Ansprüche, wobei zumindest eins der Gase eine Temperatur im Bereich von 50-150°C, insbesondere im Bereich von 90-110°C hat, um das Produkt auf eine Behandlungstemperatur zu bringen.

7. Verfahren nach Anspruch 6, wobei die Gase und das Produkt nach dem Mischen über eine bestimmte Behandlungsperiode, insbesondere über zumindest 10s auf der Behandlungstemperatur gehalten werden.

8. Verfahren nach einem der vorstehenden Ansprüche, wobei das Produkt zumindest ein denaturierbares Protein oder eine Proteinmischung umfasst.

9. Verfahren nach einem der vorstehenden Ansprüche, wobei die Gase zumindest 10%, insbesondere zumindest 20% von relativ schwer in dem Produkt löslichem Gas umfassen, wobei die Prozentwerte auf dem Volumen des Endprodukts basieren.

10. Verfahren nach einem der vorstehenden Ansprüche, wobei zumindest das eingespeiste Gas nach der Einspeisung in das Produkt beschleunigt wird.

11. Verfahren nach einem der vorstehenden Ansprüche, wobei die Gase derart mit dem Produkt gemischt werden, dass zumindest ein Teil der resultierenden Gasblasen einen Durchmesser von weniger als 100µm, insbesondere von weniger als 50µm hat.

12. Vorrichtung zum Bilden von Gasblasen in einer Proteinlösung, insbesondere nach einem Verfahren gemäß einem der vorstehenden Ansprüche, wobei die Vorrichtung mit einem Mischraum (3) versehen ist, um das Produkt mit zumindest einem kondensierenden Gas und einem in dem Produkt schwer löslichen Gas zu mischen, und mit eine Produktzuführung (2), um das Produkt dem Mischraum (3) zuzuführen, wobei die Vorrichtung mit zumindest einer Gasdüse (1) versehen ist, die angeordnet ist, um zumindest eins der Gase mit einer Überschallmischgeschwindigkeit in den Mischraum (3) zu spritzen, und wobei die Gasdüse (1) eine Dampfdüse aufweist, die mit einem Dampferzeuger gekoppelt ist.

13. Vorrichtung nach Anspruch 12, wobei die Gasdüse (1) mit zumindest einer Überschallausflussdüsenöffnung (4) versehen ist.

14. Vorrichtung nach Anspruch 13, wobei die Ausflussdüsenöffnung (4), gesehen in einer Gasflussrichtung (D), in Reihe mit einem konvergierenden Kanalteil (5) und einem divergierenden Kanalteil (6) vorgesehen ist.

15. Vorrichtung nach zumindest Anspruch 12, wobei der Mischraum (3), gesehen in einer Stromabwärtsrichtung der Gasdüse (1), konvergiert.

16. Vorrichtung nach Anspruch 12, wobei die Vorrichtung mit einem Zufuhrmittel (1) zum Zuführen des schwer löslichen Gases in den Mischraum (3) versehen ist.

17. Vorrichtung nach Ansprüchen 12 und 16, wobei die Gasdüse (1) das Zufuhrmittel eines in dem Produkt schwer löslichen Gases aufweist.

18. Vorrichtung nach zumindest Anspruch 12, wobei die Vorrichtung mit einer Produktzuführung (2) versehen ist, um das Produkt dem Mischraum (3) zuzuführen.

19. Vorrichtung nach zumindest Anspruch 18, wobei die Produktzuführung (2) und die Gasdüse (1) stofflich voneinander getrennt sind.

20. Vorrichtung nach zumindest Anspruch 15, versehen mit einem Produktablass (8), um das mit den Gasen gemischte Produkt aus dem Mischraum (3) abzulassen.

21. Vorrichtung nach zumindest Anspruch 15, wobei stromabwärts der Gasdüse (1) eine Dispergiereinrichtung angeordnet ist.

22. Lebensmittel, präpariert mit einem Verfahren nach einem der Ansprüche 1 bis 11 und/oder mit einer Vorrichtung nach einem der Ansprüche 12 bis 21, welches Lebensmittel Gasblasen mit wärmedenaturierten und quervernetzten Proteinen an ihren Oberflächen umfasst, wobei zumindest ein Teil der Gasblasen einen Durchmesser von weniger als 100µm, insbesondere weniger als 50µm hat.

## Revendications

1. Procédé pour former des bulles de gaz dans un produit liquide, dans lequel au moins un gaz de condensation et un gaz peu soluble dans le produit sont mélangés avec le produit pour former lesdites bulles de gaz dans le produit, où au moins l'un desdits gaz est injecté dans le produit à une vitesse de mélange supersonique.

2. Procédé selon la revendication 1, dans lequel lesdits gaz sont injectés dans le produit sous forme de mélange de gaz.

3. Procédé selon l'une quelconque des revendications précédentes, dans lequel le gaz de condensation comprend de la vapeur d'eau.

4. Procédé selon l'une quelconque des revendications précédentes, dans lequel le gaz peu soluble comprend un gaz inerte, en particulier de l'azote.

5. Procédé selon l'une quelconque des revendications précédentes, dans lequel ledit gaz de condensation se condense sensiblement après formation de bulles de gaz dans ledit produit.

6. Procédé selon l'une quelconque des revendications précédentes, dans lequel au moins l'un desdits gaz a une température dans la gamme de 50 à 150 °C, en particulier dans la gamme de 90 à 110 °C, pour amener le produit à une température de traitement.

7. Procédé selon la revendication 6, dans lequel lesdits gaz et le produit après mélange sont maintenus à ladite température de traitement pendant une période de traitement particulière, en particulier pendant au moins 10 s.

8. Procédé selon l'une quelconque des revendications précédentes, dans lequel le produit comprend au moins une protéine ou un mélange de protéines dénaturables.

9. Procédé selon l'une quelconque des revendications précédentes, dans lequel lesdits gaz comprennent au moins 10 %, en particulier au moins 20 %, de gaz relativement peu soluble dans le produit, les pourcentages étant basés sur le volume du produit final.

10. Procédé selon l'une quelconque des revendications précédentes, dans lequel au moins le gaz injecté, après l'injection dans le produit, est accéléré.

11. Procédé selon l'une quelconque des revendications précédentes, dans lequel les gaz sont mélangés avec le produit, de telle sorte qu'au moins une partie des bulles de gaz résultantes ont un diamètre inférieur à 100 µm, en particulier inférieur à 50 µm.

12. Appareil de formation de bulles de gaz dans une solution de protéine, en particulier selon un procédé selon l'une quelconque des revendications précédentes, dans lequel l'appareil est pourvu d'un espace de mélange (3) pour mélanger le produit avec au moins un gaz de condensation et un gaz peu soluble dans le produit et avec une alimentation en produit (2) pour alimenter en produit l'espace de mélange (3), l'appareil étant pourvu d'au moins un injecteur de gaz (1) qui est agencé pour faire jaillir au moins l'un desdits gaz dans l'espace de mélange (3) à une vitesse de mélange supersonique, et où l'injecteur de gaz (1) comprend un injecteur de vapeur d'eau qui est couplé à un générateur de vapeur d'eau.

13. Appareil selon la revendication 12, dans lequel ledit injecteur de gaz (1) est pourvu d'au moins une buse d'échappement supersonique (4).

14. Appareil selon la revendication 13, dans lequel ladite buse d'échappement (4), vue dans une direction d'écoulement des gaz (D), est pourvue en succession d'une partie de canal convergente (5) et d'une partie de canal divergente (6).

15. Appareil selon au moins la revendication 12, dans lequel ledit espace de mélange (3) vu dans une direction aval de l'injecteur de gaz (1), converge.

16. Appareil selon la revendication 12, dans lequel l'appareil est pourvu d'un moyen d'alimentation (1) pour alimenter ledit espace de mélange (3) en ledit gaz peu soluble.

17. Appareil selon les revendications 12 et 16, dans lequel ledit injecteur de gaz (1) comprend lesdits moyens d'alimentation d'un gaz peu soluble dans le produit.

18. Appareil selon au moins la revendication 12, dans lequel l'appareil est pourvu d'une alimentation en produit (2) pour alimenter l'espace de mélange (3) en le produit.

19. Appareil selon au moins la revendication 18, dans lequel l'alimentation en produit (2) et l'injecteur de gaz (1) sont sensiblement séparés l'un de l'autre.

20. Appareil selon au moins la revendication 15, pourvu d'une évacuation de produit (8) destinée à évacuer le produit mélangé avec lesdits gaz de l'espace de mélange (3).

21. Appareil selon au moins la revendication 15, dans lequel est agencé un dispositif de dispersion en aval de l'injecteur de gaz (1).

22. Aliment, préparé avec un procédé selon l'une quelconque des revendications 1 à 11 1 et/ou un appareil selon l'une quelconque des revendications 12 à 21, lequel aliment comprend des bulles de gaz contenant des protéines dénaturées à la chaleur et réticulées à leur surface, bulles de gaz dont au moins une partie a un diamètre inférieur à 100 µm, en particulier inférieur à 50 µm.
